# EUROPEAN PATENT SPECIFICATION

(11) **EP 3 398 091 B1**
(45) Date of publication and mention of the grant of the patent: **11.05.2022**
(21) Application number: 17752645.6
(22) Date of filing: 03.02.2017
(51) Int. Cl.: G06F 16/2452, G06F 16/2453, G06F 16/25, G06F 16/00, G06F 16/2455

(54) **SYSTEM AND METHOD FOR UNIFIED ACCESS CONTROL ON FEDERATED DATABASE**
SYSTEM UND VERFAHREN ZUR VEREINHEITLICHTEN ZUGRIFFSKONTROLLE AUF EINE FÖDERIERTE DATENBANK
SYSTÈME ET PROCÉDÉ DE CONTRÔLE D'ACCÈS UNIFIÉ SUR UNE BASE DE DONNÉES FÉDÉRÉE

(30) Priority: 19.02.2016 IN 201641005870
(43) Date of publication of application: 07.11.2018
(73) Proprietor: Huawei Technologies Co., Ltd., Longgang District Shenzhen, Guangdong 518129 (CN)
(72) Inventor: KAMMATH, V Vimal Das, Bengaluru Karnataka 560037 (IN); THOMAS, Tijo, Bengaluru Karnataka 560037 (IN); KRISHNANKUTTY CHANDRIKA, Vinod, Bengaluru Karnataka 560037 (IN)
(74) Representative: Gill Jennings & Every LLP
(86) International application number: PCT/CN2017/072859
(87) International publication number: WO 2017/140213

(56) References cited:
- US-A1- 2013 218 911
- US-A1- 2013 325 841
- US-A1- 2015 317 486
- US-A1- 2015 370 897

## Description

### TECHNICAL FIELD

The present subject matter described herein, in general, relates to database technologies, and more particularly, to system, method, and device for unified access control on federated database.

### BACKGROUND

As conventionally known, a database is a collection of information that is organized so that it can easily be accessed, managed, and updated. In one view, databases can be classified according to types of content: bibliographic, full-text, numeric, and images. A federated database system is a type of meta-database management system (DBMS), which transparently maps multiple autonomous database systems into a single federated database. The constituent databases are interconnected via a computer network and may be geographically decentralized. The federated database is a system in which several databases appear to function as a single entity. Each component database in the system is completely self-sustained and functional. Since the constituent database systems remain autonomous, the federated database system is a contrastable alternative to the (sometimes daunting) task of merging several disparate databases. The federated database, or virtual database, is a composite of all constituent databases in a federated database system. There is no actual data integration in the constituent disparate databases as a result of data federation.

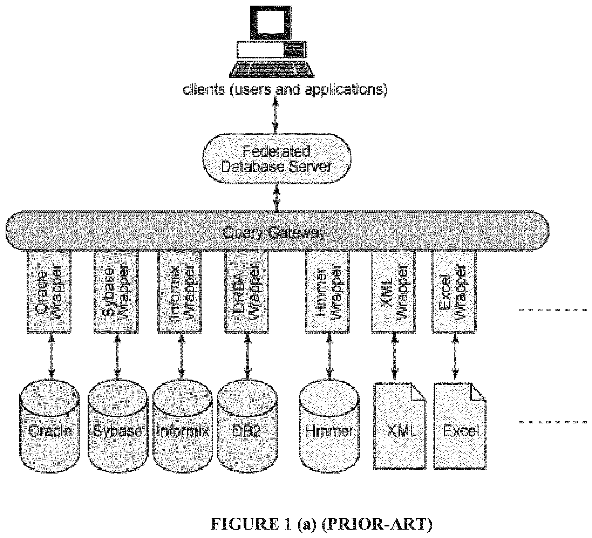

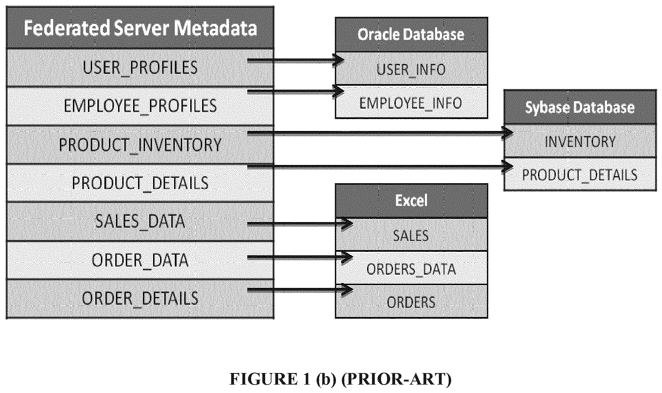

Figure **1**(a) shows a conventional federated database system in which the clients and the users are connected to a single database server, federated server. The federated server presents a collection of tables to the users and clients. The federated server does not contain or store any database tables. The federated server just maintains a metadata mapping that maps a virtual federated table to a real/physical table in one of the underlying databases. The figure **1**(a) may also be considered as an illustration of the federation in big data. Figure **1**(b) illustrates the metadata mapping that maps a virtual federated table to a real/physical table in one of the underlying databases. When user queries one or more tables from the federated server, it finds the location of the physical tables from the mapping metadata and executes the query on the real physical databases, collects and joins the result, then sends the result to the user.

Fine grained access control is a natural requirement for many applications, and some commercial systems have recently started added support for specifying such policies. Applications can leverage this functionality by specifying a policy (using the notion of predicated grants) and the database system will enforce this policy by suitably rewriting queries. The authorization policies can use complex SQL (structured query language) constructs such as sub queries and union, thus increasing the complexity and cost of the rewritten queries. Generally, the federated database system does not implement the fine-grained access control (i.e., access control based on table level, column level, row level).

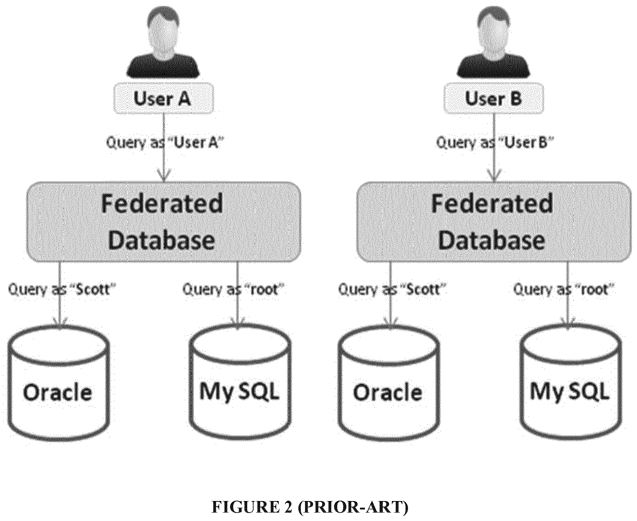

As discussed in various available prior-art mechanisms, the access control in the federated database system generally depends on the access control feature of the underlying physical database. The login credentials of each of the underlying database are configured in the federated database server. Further, some prior-art also enables providing multiple login credentials of each of the underlying database configured in the federated database server. Each user of the federated database is mapped to different users in underlying database. Figure **2** illustrates on such example, wherein login credentials of each of the underlying database are configured in the federated database server. As shown in figure **2**, irrespective of which user queries the federated database, the underlying database is queried with the same credential. Further, as shown in figure **2**, irrespective of whether "User A" or "User B" of the federated database is executing the query, The underlying Oracle database is queried as "Scott" and the underlying My SQL database is queried as "root".

A general observation can be made, after critical reviews and availability of the conventional federated databases systems and various techniques for access controls in federated database systems, as federated databases do not implement fine-grained access control providing all users with same level of access. Further, the access needs to be controlled by configuring in each respective database (DB). Furthermore, the conventional federated databases systems and various techniques for access controls in federated database systems are not suitable for databases such as big data systems.

US 2015/317486A1 indicates a method of controlling access to secured data. A repository operatively coupled to one or more databases storing secure data is employed to intercept a user query of one database of the one or more databases.

US 2015/0370897A1 provides a method and an apparatus of querying data.

### SUMMARY

The invention has been defined in the independent claims. Further specific technical features have been defined in the dependent claims.

This summary is provided to introduce concepts related to systems, methods, and devices for unified access control on federated databases, and the same are further described below in the detailed description. This summary is not intended to identify essential features of the claimed subject matter nor is it intended for use in determining or limiting the scope of the claimed subject matter. The disclosure is defined by the claims.

A main objective of the present disclosure is to solve the technical problem as recited above by providing systems, methods, and devices for the federated database server to provide centralized fine grained access control for users.

Accordingly, in one implementation, a federated system to provide a unified access control for the data stored in federated databases is disclosed. The federated system includes at least one query parser, at least one query planner, at least one central access controller, at least one physical query generator, and at least one executor. The query parser is configured to receive at least a federated query, parse the federated query received to fetch at least a table associated information from the federated query, the table associated information comprises at least a table and associated column name, and validate the table associated information fetched against at least a federated metadata pre-stored to identify at least one table in at least one database. The query planner is configured to generate at least a query plan based on the table associated information and utilizing the table identified. The central access controller is configured to verify the query plan generated for table associated information against at least a user rights pre-stored in at least at least one central authorization metadata table, the table and the associated column name is verified, and update, if the user rights pre-stored deny access to the table associated information identified (i.e., when user rights pre-stored does not have access to all columns and/or when user rights pre-stored does not have access to all rows), the query plan generated. The physical query generator is configured to convert the query plan updated to at least a physical query for execution by the database. The executor is configured to execute the physical query to return at least result for the federated query received.

In one implementation, a method for providing unified access control for the data stored federated databases is disclosed. The method comprises:
- receiving at least a federated query;
- parsing the federated query received to fetch table associated information from the federated query, the table associated information comprises one or more tables and associated column names;
- generating a query plan based on the table associated information;
- verifying the generated query plan by using a user right pre-stored in a central authorization metadata table and the one or more tables and associated column names;
- and, based on the verification, failing the federated query if, according to the user right, any of the one or more tables are restricted to the user, otherwise,failing the query if, according to the user right, at least one of the columns of the query plan is restricted, otherwise, updating the generated query plan, wherein the updating comprises: for each column name associated with the one or more tables in the query plan: if the column name is an asterisk, replacing the asterisk with all column names for columns of the associated table not restricted according to the user right, and after all columns in the query plan have been checked and the query did not fail: if, according to the user right, there are any restricted rows associated with the one or more tables in the query plan, adding a filter to exclude the restricted rows from the generated query plan.

A device in a federated system, to provide a unified access control for the data stored in federated databases is disclosed. The device comprises processor, coupled to a memory, for executing a plurality of modules present in the memory, the processor on execution of the modules. The device is configured to receive at least a query plan generated, verify the query plan generated against at least a user rights pre-stored in at least one central authorization metadata table, a table and an associated column name from the query plan is verified, update, if the user rights pre-stored deny access to the query plan verified, the query plan generated (i.e., when user rights pre-stored does not have access to all columns and/or when user rights pre-stored does not have access to all rows), convert the query plan updated to at least a physical query for execution by at least one database, and execute the physical query to return at least result for the federated query received. Further, the query plan is updated if the user rights pre-stored allows access to table and/or when the query plan is generated for the query containing "select ^{∗}" but access to some columns is not available, and/or when the query plan is generated for the query containing row level access restrictions predefined.

The query plan is generated based on at least table associated information fetched from at least one federated query received. The federated query received is failed if access to at least a table and/or column is restricted.

The central access controller further removes at least a restricted column from the query plan generated to update the query plan generated, the restricted column is removed specifically in case of query plan generated for the federated query received containing asterisk; and/or add at least a filter to exclude at least a restricted row from the query plan generated to update the query plan generated; and/or fail the federated query received if the query includes at least a restricted table and/or column to update the query plan generated.

The central access controller further stores the user rights in the central authorization metadata table holding information associated with the access to the table associated information received in the federated query against at least a user accessing the database.

The central access controller further verifies if the table extracted from the query plan received comprise access restricted to the user, the access is verified using the central authorization metadata; extract, if not restricted, at least a column from the query plan if not restricted; verify if the column access is restricted to the user, if not, verify if at least a row in the column access is restricted to the user; and add at least a filter to exclude the row restricted and thereby update the query plan received for the execution of the query plan updated if row is restricted, or update the query plan received for the execution of the query plan updated if the row not restricted.

The central authorization metadata table stores at least a table level control or a column level control, or a row level control, or a record level control, or any combination thereof, associated with at least a table residing in the database.

The central authorization metadata table is logically associated with at least one federated metadata in the database.

The technical benefit achieved by the implementation of the present disclosure is that, the systems, methods, and devices according to the present disclosure:
- provides access control for federated queries, where in different users can have different access rights to the federated tables;
- provides security and access control in big data at a higher layer by applying restrictions/filters in the query itself;
- provides common access control for databases which do not have built-in access control mechanism such as in Big Data - Hbase, Parquet files etc;
- provides unified access control having combination of the big data with traditional data sources;
- provides a single point to control security and access control for big data instead of configuring the security and access control in each data source individually;
- provides uniform, higher level access control for federated databases;
- provides access control even if the underlying data source does not provide built-in access control mechanism;
- reduce/avoid the risk of security leaks in traditional approach where in the administrator needs to configure security in many different systems;
- provides ease of operating the federated database for security/system administrators;
- provides centralized view of data access and centralized data governance.

Further, in contrast to the prior-art techniques, the present disclosure by systems, methods and devices, provide a central access control for Federated database. The central mechanism is further used for configuring the access control (fine grained - table level, column level, row level) to various underlying databases in a federated system.

Furthermore, in contrast to the prior-art techniques, the present disclosure by systems, methods and devices, provides a central access controller checks the tables and column names in the query plan against the users' rights in a central authorization metadata. The central authorization metadata includes a table level control, a column level control, and/or a row level control. The central access controller is configured to update the query plan by removing the restricted columns from the plan, adding filters to exclude restricted rows, or by failing the query if the query includes a restricted table. When the columns are restricted, the columns are removed from query plan if a column is not specified explicitly, i.e., the query includes "select ^{∗}", and/or the query is failed if user has explicitly specified any restricted column in the query.

The various options and preferred implementations referred to above in relation to the first implementation are also applicable in relation to the other implementations.

### BRIEF DESCRIPTION OF THE ACCOMPANYING DRAWINGS

The detailed description is described with reference to the accompanying figures. In the figures, the left-most digit(s) of a reference number identifies the figure in which the reference number first appears. The same numbers are used throughout the drawings to refer like features and components.
Figure **1 (a)** illustrates the federation in big data, as available in the prior-art.
Figure **1 (b)** illustrates the metadata mapping that maps a virtual federated table to a real/physical table in one of the underlying databases, as available in the prior-art.
Figure **2** illustrates an example wherein login credentials of each of the underlying database are configured in the federated database server, as available in the prior-art.
Figure **3** illustrates a block diagram of a system to provide a central access control for federated database, in accordance with an implementation of the present subject matter.
Figure **4** illustrates a central authorization metadata, in accordance with an implementation of the present subject matter.
Figure **5** illustrates central authorization metadata integration with federated metadata, in accordance with an implementation of the present subject matter.
Figure **6** illustrates a design of central access controller flow, in accordance with an implementation of the present subject matter.
Figure **7** illustrates a flowchart for central access controller flow, in accordance with an implementation of the present subject matter.
Figure **8**(a), figure **8**(b), figure **8**(c), figure **9**(a), figure **9**(b), figure **10**, figure **11**, and figure **12** illustrates an example of the central access, in accordance with an implementation of the present subject matter.
Figure **13** illustrates a federated system to provide a unified access control for the data stored in federated databases, in accordance with an implementation of the present subject matter.
Figure **14** illustrates a device, in a federated system, to provide a unified access control for the data stored in federated databases, in accordance with an implementation of the present subject matter.
Figure **15** illustrates a method for providing unified access control for the data stored federated databases, in accordance with an implementation of the present subject matter.

It is to be understood that the attached drawings are for purposes of illustrating the concepts of the disclosure and may not be to scale.

### DETAILED DESCRIPTION OF THE PRESENT DISCLOSURE

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

The disclosure can be implemented in numerous ways, as a process, an apparatus, a system, a composition of matter, a computer readable medium such as a computer readable storage medium or a computer network wherein program instructions are sent over optical or electronic communication links. In this specification, these implementations, or any other form that the disclosure may take, may be referred to as techniques. In general, the order of the steps of disclosed processes may be altered within the scope of the disclosure.

A detailed description of one or more implementations of the disclosure is provided below along with accompanying figures that illustrate the principles of the disclosure. The disclosure is described in connection with such implementations, but the disclosure is not limited to any implementation. The scope of the disclosure is limited only by the claims and the disclosure encompasses numerous alternatives, modifications and equivalents. Numerous specific details are set forth in the following description in order to provide a thorough understanding of the disclosure. These details are provided for the purpose of example and the disclosure may be practiced according to the claims without some or all of these specific details. For the purpose of clarity, technical material that is known in the technical fields related to the disclosure has not been described in detail so that the disclosure is not unnecessarily obscured.

Systems, methods, and devices for unified access control on federated databases are disclosed.

While aspects are described for systems, methods, and devices for unified access control on federated databases, the present disclosure may be implemented in any number of different computing systems, environments, and/or configurations, the implementations are described in the context of the following exemplary systems, apparatus, and methods.

In one implementation, a main objective of the present disclosure is to solve the technical problem as recited above by providing systems, methods, and devices for the federated database server to provide centralized fine grained access control for big data. The present disclosure provides a central mechanism for configuring the access control (fine grained - table level, column level, row level) to various underlying databases in a federated system.

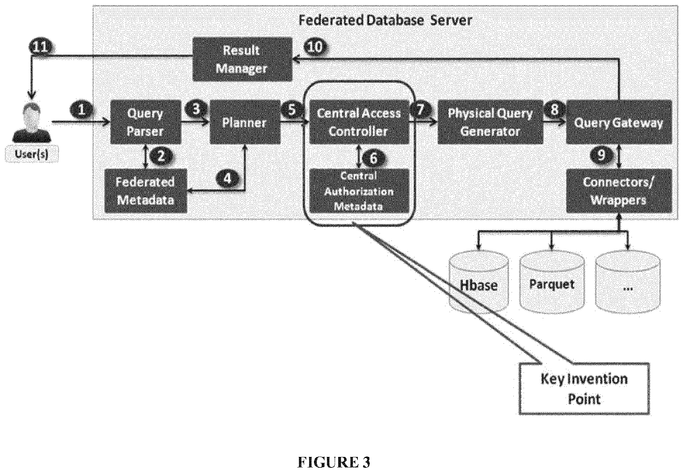

Referring now to figure **3**, a block diagram of a system to provide a central access control for federated database is illustrated, in accordance with an implementation of the present subject matter. In one implementation, figure **3**, shown various components that may be involved during the implementation of the present disclosure. In one implementation, the present disclosure may include at least one query parser, at least one query planner, at least one central access controller, at least one physical query generator, and at least one executor.

As shown in figure **2**, user may input a federated query. As already known, the federated query is the ability to take a query and provide solutions based on information from many different sources. The parser parses the query and fetches the table and column names used in query, validates the table and column names against the federated metadata. The parser then inputs the validated parsed information to the planner. The planner uses the parsed information and creates a query plan based on the source information from the federated metadata. The planner then sends the plan to the central access controller.

The central access controller checks the tables and column names in the query plan against the user's rights in a central authorization metadata. The central access controller updates the query plan by removing the restricted columns from the plan, adding filters to exclude restricted rows, and/or failing the query if the query includes a restricted table and/or a restricted column.

The physical query generator may then convert the query plan updated to the physical queries for the underlying databases. A query gateway/ the executor execute the physical queries and send the results to result manager. The result manager may merge the results of multiple queries fired against multiple physical databases, and the final result is returned to the user.

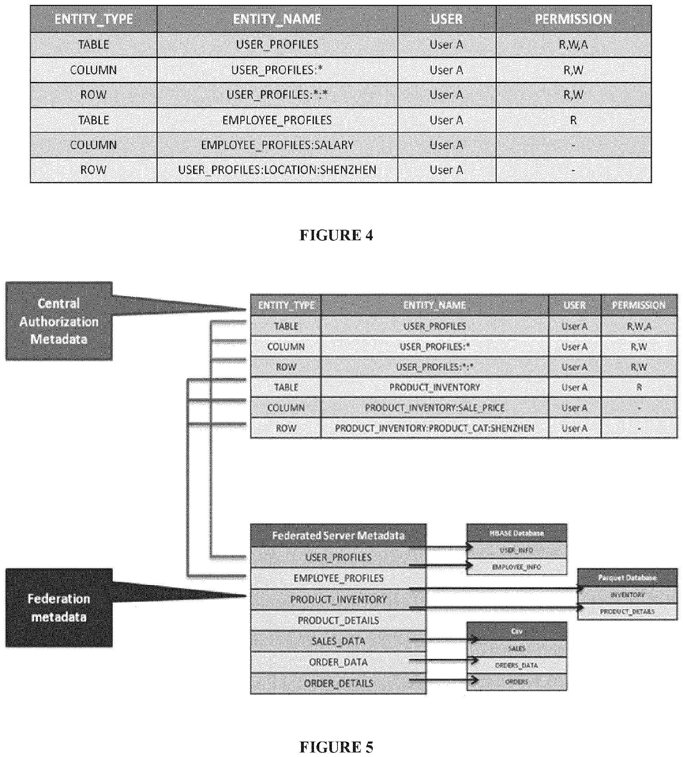

Referring now to figure **4** a central authorization metadata is illustrated, in accordance with an implementation of the present subject matter. As shown in the figure **4**, the central authorization metadata is a table storing the access rights granted for respective users in fine-grained access control (table level, column level, row level) manner.

The central authorization metadata includes an entity type selected from a table, column, row, object or any combination thereof, an entity name selected based on the user accessing the present disclosure, a user information, and respective permission/ access rights. The access rights are configurable or editable by an authorized person.

The central authorization metadata includes. but is not limited to, information associated with the table level control, column level control, and row level control. The table level control may indicate a user that can access which table (read (R)/write (W)/alter (A)) along with an entity name- "Table _Name". The column level control may indicate a user can access which column (read/write) along with entity name - "Table_Name:Column_Name". The row level control may indicate a user can that access which rows (Read) along with the entity name - "Table Name:Column Name:Cell Value".

Referring now to figure 5, central authorization metadata integration with federated metadata is illustrated, in accordance with an implementation of the present subject matter. The federated metadata and the central authorization metadata may be stored in two different metadata stores, or may be stored in a single metadata store. The integration between these two metadata is by logical name references wherein the table names defined in the federated metadata will be exactly the same table names used in the central authorization metadata.

In one implementation, as shown in the figure **5**, the central authorization metadata maps a virtual federated table to a real/physical table in one of the underlying databases. When user queries one or more tables from the federated server, according to the present disclosure, based only upon the access check from the central authorization metadata, and if an authorization to access the data is provided, it finds the location of the physical tables from the mapping metadata and executes the query on the real physical databases, collects and joins the result, then sends the result to the user.

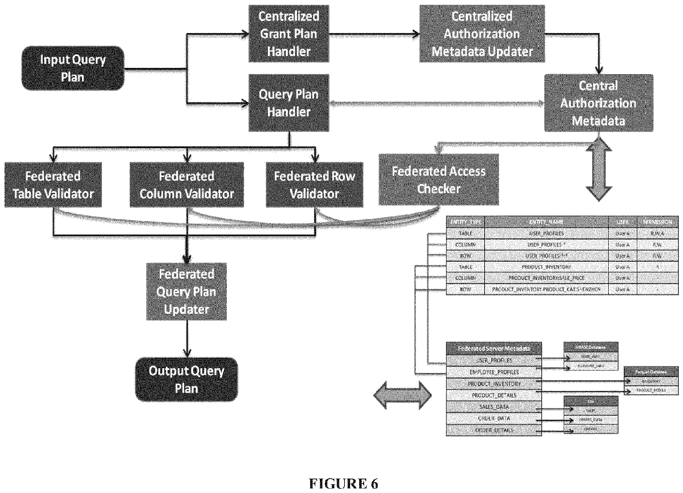

Referring now to figure **6****,** a design of central access controller flow is illustrated, in accordance with an implementation of the present subject matter, the central access controller is designed to handle user queries as well as updates to the central authorization metadata (grant commands). If the user/administrator issues a grant command, the central access controller receives a centralized grant plan, and the central authorization metadata is updated in accordance with the parameters provided along with the grant command. If the user issues a query, the central access controller receives a query plan which is further validated and updated and finally the updated query plan generated as output.

In one implementation, as shown in figure **6**, the centralized authorization metadata updater upon accessing the central authorization metadata is configured to access at least a federated access checker to invoke at least a federated row validator, federated column validator, and/or federated table validator, and thereby update the federated query plane using a federated query plan update for the execution of the updated query plan.

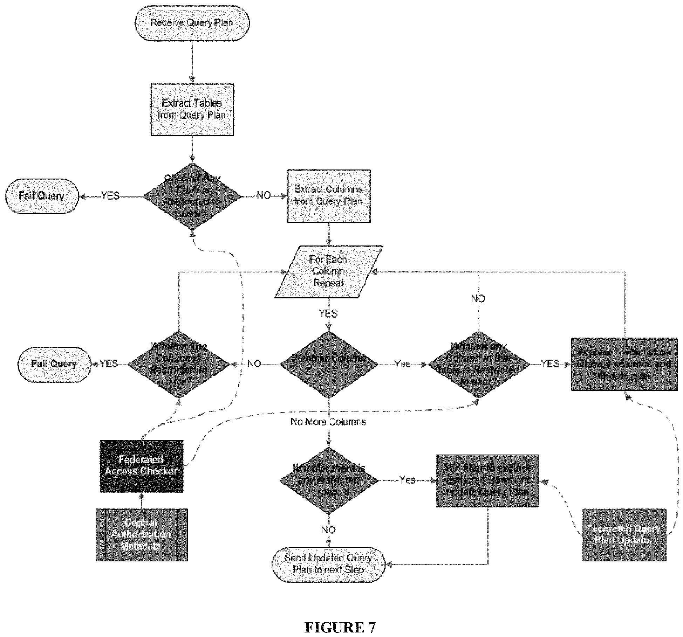

Referring now to figure **7**, a flowchart for central access controller flow is illustrated, in accordance with an implementation of the present subject matter. As shown in the figure **7**, the central access controller first extracts the table information from the query plan and checks if any table is restricted to the user, fails the query if any one or more of the selected tables is restricted. If all the selected tables are not restricted the columns are extracted from the query plan and check if any of the columns are restricted. If the user's query specifies wild card column names ^{∗}, and if there is any column restricted column in the table, ^{∗} is replaced with the list of allowed columns. If any selected column in the plan is restricted, then the query is failed. Finally if there is any restricted rows an appropriate filter is added to the query plan.

As shown in figure **7**, a query plan is received by the present disclosure. On receipt of the query plan, the present disclosure is configured to extract at least the tables received in the query. The present disclosure, on extraction of the table, checks if the table is restricted to the user for access according to the central authorization metadata. If the table access is not restricted to the user, the present disclosure is further configured to check if the column has access restriction to this particular user. If the column does not have any access restrictions, the present disclosure is configured to check if any rows are further restricted to be accessed by the particular user. If there are no restrictions on the row access, the query is executed and the result is returned.

In implementations according to the claimed invention if the column and/or row is found with the restriction of query access, the present disclosure is configured to add the filters to exclude the restricted rows and accordingly update the query plan using the federated query updater.

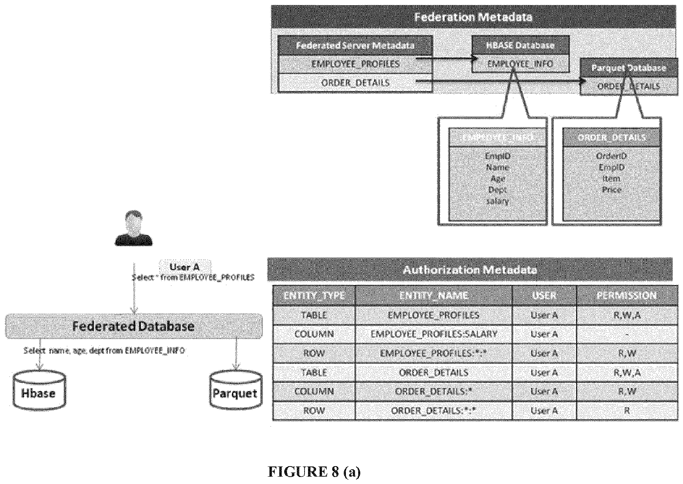

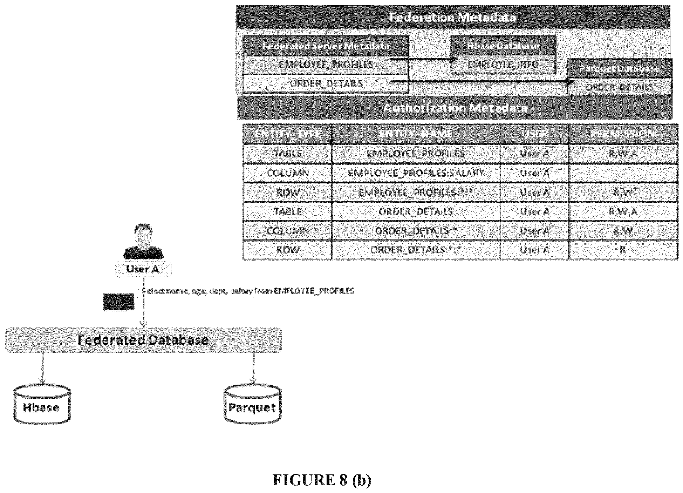

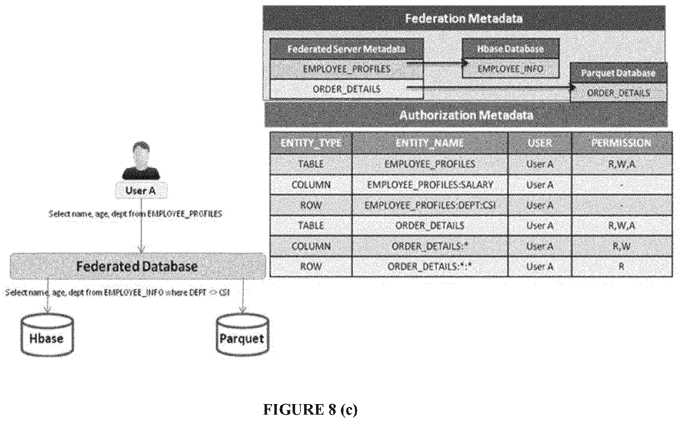

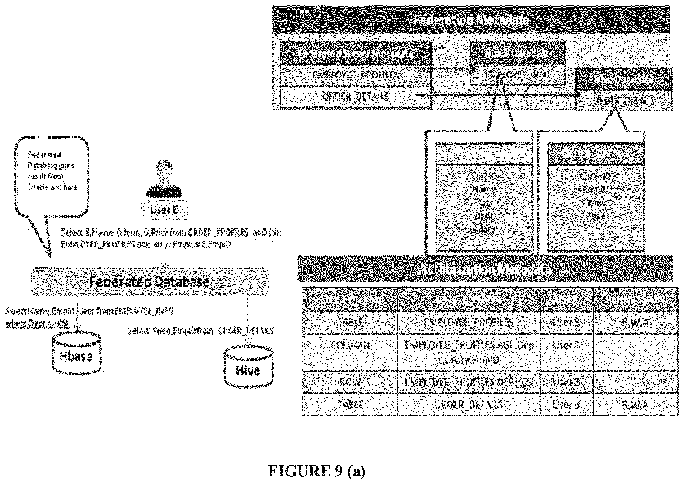

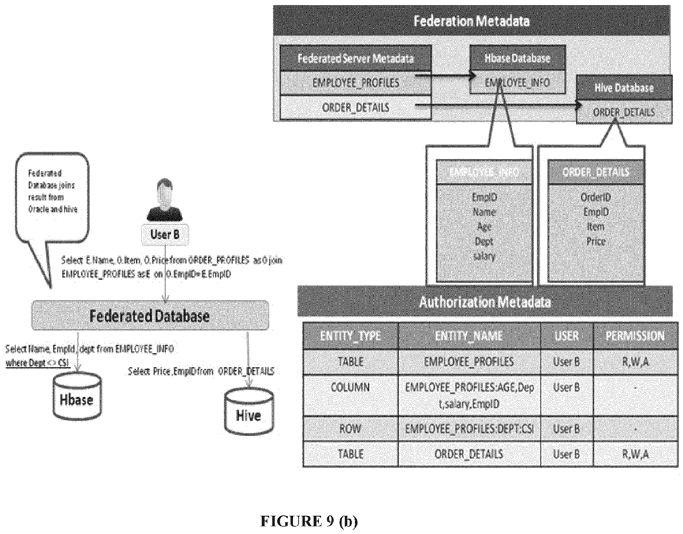

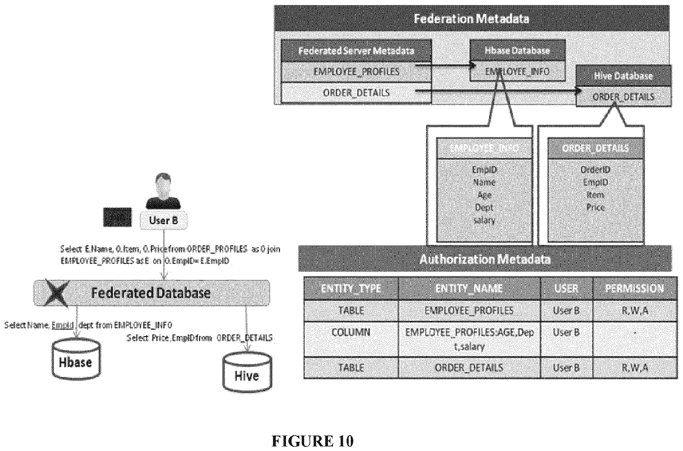

Figure **8**(a), figure **8**(b), figure **8**(c), figure **9**(a), figure **9**(b), figure **10**, figure **11**, and figure **12** illustrates an example of the central access, in accordance with an implementation of the present subject matter. The figures 8-12 show how the query is modified by the central access controller in various scenarios.

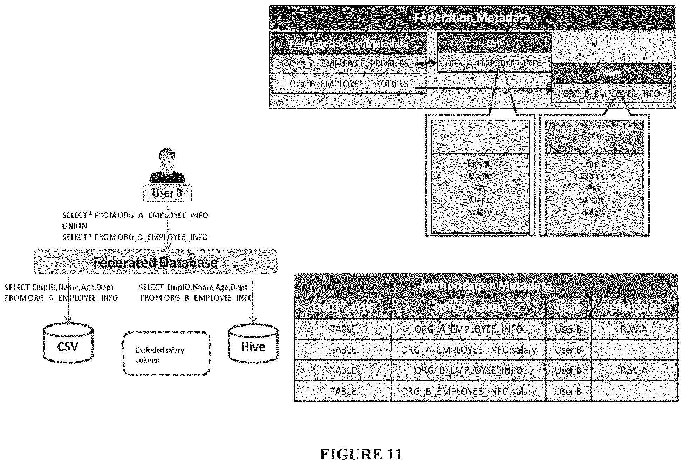

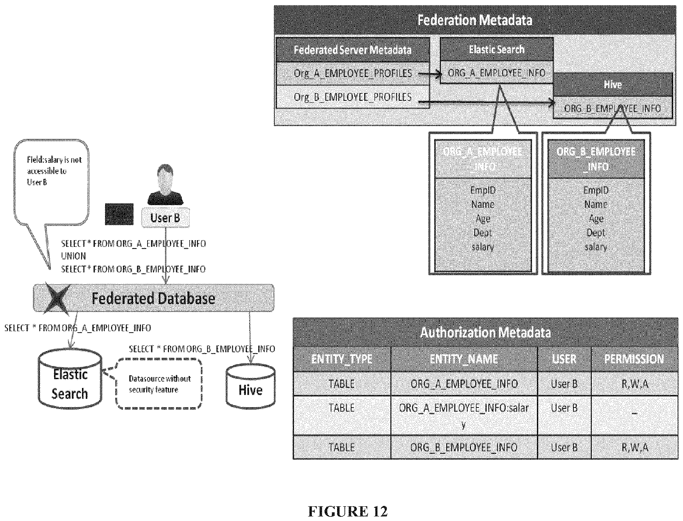

Figure **8** (a) shows a scenario in which a select ^{∗} query replace with only authorized columns is fired. Figure **8****(**a) shows a select ^{∗} query (Select ^{∗} from EMPLOYEE_PROFILES). In this case access controller sees that there are **4** columns in the table, but salary column is restricted. So access controller replaces ^{∗} with the **3** allowed columns. And makes the query as "Select EmpID name, age, dept from EMPLOYEE_INFO". Figure **8**(b) shows scenario in which the query fails assessing un-authorized columns. In the query "Select name, age, dept, salary from EMPLOYEE PROFILES", 4 fields (name, age, dept, salary) are accessed, but salary column is restricted , in that case, query will fail to execute. Figure **8**(c) shows a scenario showing an automatically add filter to exclude un-authorized rows. In the query, "Select name, age, dept from EMPLOYEE INFO, the value 'CSI' in column 'DEPT'is restricted from User A. Hence access controller will add a filter condition 'where DEPT <> CSI' in the select query Figure **9**(a) show a scenario for join federated tables. As there are no restricted columns used in the select query "Select E.Name, O.Item, O.Price from ORDER_PROFILES as O join EMPLOYEE PROFILES as E on O.EmpID= E.EmpID", it will run successfully. Figure **9**(b) shows a join federated tables with access control for row level. On the table with row level access restriction, access Controller will automatically add a filter condition 'DEPT <> CSI' into the select query, Figure **10** shows a scenario with join federated tables without any access to the join key. Select query will fail when access to the column used in join condition is restricted. Figure **11** shows a union of federated tables. In both select ^{∗} queries "Select ^{∗} from ORG A EMPLOYEE INFO" and "Select ^{∗} from ORG B EMPLOYEE INFO " , access controller sees that there are **5** columns in the tables, but salary column is restricted. So access controller replaces ^{∗} with the **4** allowed columns in ORG_A_EMPLOYEE_INFO and ORG_B_EMPLOYEE_INFO tables, since column name, types and column count are same in both queries, Union operation will run successfully. Figure **12** shows a column level access restriction during a union operation. In Select ^{∗} from ORG_A_EMPLOYEE_INFO", access controller sees that there are **5** columns in the tables, but salary column is restricted, so access controller will replace ^{∗} with 4 allowed columns. In Select ^{∗} from ORG_B_EMPLOYEE_INFO" access controller replaces ^{∗} with the all 5 available columns of the table, since column count of first and second query are different the union operation will fail.

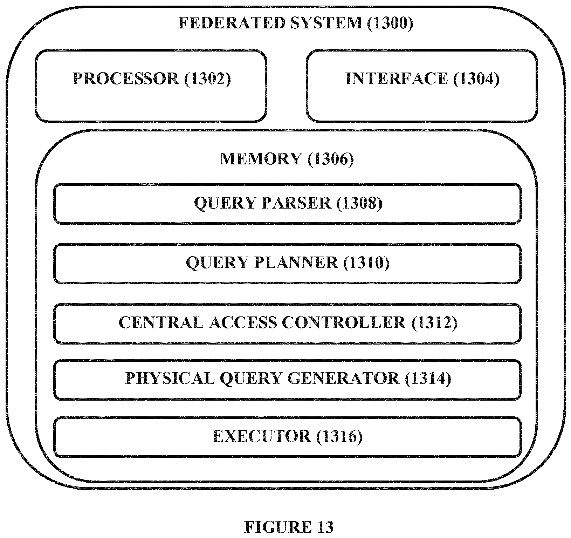

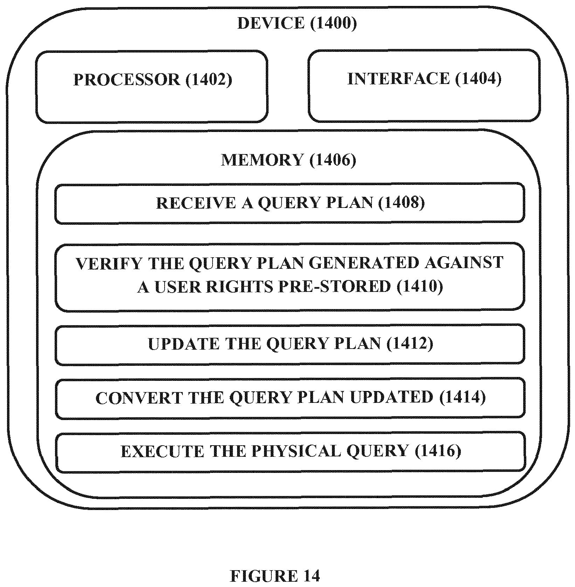

Referring now to figure **13**, a federated system **1300** to provide a unified access control for the data stored in federated databases is disclosed. Referring now to figure **14**, a device **1400**, in a federated system, to provide a unified access control for the data stored in federated databases, is disclosed. Although the present subject matter is explained considering that the present disclosure is implemented in the federated system **1300** and/or the device **1400**, it may be understood that the database system may also be implemented in a variety of computing systems, such as a laptop computer, a desktop computer, a notebook, a workstation, a mainframe computer, a server, a network server, and the like. It will be understood that the database system may be accessed by multiple users, or applications residing on the database system. Examples of the federated system **1300** and/or the device **1400** may include, but are not limited to, a portable computer, a personal digital assistant, a handheld device, sensors, routers, gateways and a workstation. The federated system **1300** and/or the device **1400** are communicatively coupled to each other and/or other devices or a nodes or apparatuses to form a network (not shown). Examples of the federated system **1300** and/or the device **1400** may include, but are not limited to, a portable computer, a personal digital assistant, a handheld device, sensors, routers, gateways and a workstation. The federated system **1300** and/or the device **1400** are communicatively coupled to each other and/or other devices or a nodes or apparatuses to form a network (not shown).

In one implementation, the network (not shown) may be a wireless network, a wired network or a combination thereof. The network can be implemented as one of the different types of networks, such as GSM, CDMA, LTE, UMTS, intranet, local area network (LAN), wide area network (WAN), the internet, and the like. The network may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further the network may include a variety of network devices, including routers, bridges, servers, computing devices, storage devices, and the like.

The federated system **1300** and/or the device **1400** may include a processor, an interface, and a memory. The at least one processor may be implemented as one or more microprocessors, microcomputers, microcontrollers, digital signal processors, central processing units, state machines, logic circuitries, and/or any devices that manipulate signals based on operational instructions. Among other capabilities, the at least one processor is configured to fetch and execute computer-readable instructions or modules stored in the memory.

The interface (I/O interface) for example, **1304** and/or **1404** may include a variety of software and hardware interfaces, for example, a web interface, a graphical user interface, and the like. The I/O interface may allow the database system, the first node, the second node, and the third node to interact with a user directly. Further, the I/O interface may enable the federated system **1300** and/or the device **1400** to communicate with other devices or nodes, computing devices, such as web servers and external data servers (not shown). The I/O interface can facilitate multiple communications within a wide variety of networks and protocol types, including wired networks, for example, GSM, CDMA, LAN, cable, etc., and wireless networks, such as WLAN, cellular, or satellite. The I/O interface may include one or more ports for connecting a number of devices to one another or to another server. The I/O interface may provide interaction between the user and database system, the first node, the second node, and the third node via, a screen provided for the interface.

The memory may include any computer-readable medium known in the art including, for example, volatile memory, such as static random access memory (SRAM) and dynamic random access memory (DRAM), and/or nonvolatile memory, such as read only memory (ROM), erasable programmable ROM, flash memories, hard disks, optical disks, and magnetic tapes. The memory may include plurality of instructions or modules or applications to perform various functionalities. The memory includes routines, programs, objects, components, data structures, etc., which perform particular tasks or implement particular abstract data types.

Referring now to figure **13**, a federated system **1300** to provide a unified access control for the data stored in federated databases is disclosed. The federated system **1300** comprises at least one central access controller **1312** configured to receive at least a query plan generated; verify the query plan generated against at least a user rights pre-stored in at least one central authorization metadata table, a table and an associated column name from the query plan is verified; update, if the user rights pre-stored allow access to the query plan verified, the query plan generated; convert the query plan updated to at least a physical query for execution by at least one database; and execute the physical query to return at least a result for the federated query received.

The query plan is generated based on table associated information fetched from at least a federated query received.

The central access controller is further configured to remove a restricted column from the query plan generated to update the query plan generated; and/or add a filter to exclude restricted rows from the query plan generated to update the query plan generated; and/or fail the federated query received if the query includes restricted tables to update the query plan generated.

In one implementation, the central access controller may be further configured to store the user rights in the central authorization metadata table holding information associated with the access to the table associated information received in the federated query against at least a user accessing the database.

In one implementation, the central authorization metadata table stores at least a table level control or a column level control, or a row level control, or a record level control, or any combination thereof, associated with at least a table residing in the database.

In one implementation, the user right is at least one access right selected from a group of rights comprising: read or write or alter or any combination thereof.

In one implementation, the central authorization metadata table is logically associated with at least one federated metadata in the database.

In one implementation, the query plan is generated based on at least table associated information fetched from at least a federated query received.

In one implementation, the query plan comprise at least a table associated information to be accessed based on the federated query received, the table associated information preferably include: at least a column to be selected, or at least a filter to be applied on at least one row, or at least one operation, wherein the at least one operation is at least one of sorting, grouping or join or any combination thereof, based on the table associated information received.

In one implementation, the query plan is a grant query plan associated with a grant command, or a normal query plan associated with a traditional command, or any combination thereof.

In one implementation, if the query plan is a grant query plan, the central access controller is further configured to: update the central authorization metadata in accordance with at least information associated with the grant query plan received.

In one implementation, the central access controller further comprises at least a federated access checker configured to: validate the access to the table, and/or the column, and/or the row in the federated query.

In one implementation, the central access controller may further comprise at least a validator selected from a federated table validator, or a column validator or a row validator or any combination thereof, and if the query plan is normal query plan, the validator is configured to validate the access to the table, and/or the column, and/or the row in the federated query using at least a federated access checker.

In one implementation, the central access controller may further comprise at least a federated access checker configured to verify if the table extracted from the query plan received comprise access restricted to the user, the access is verified using the central authorization metadata; extract, if not restricted, at least a column from the query plan; and verify if the column access is restricted to the user, if not, verify if at least a row in the column access is restricted to the user; add, if row restricted, at least a filter to exclude the row restricted and thereby update the query plan received for the execution of the query plan updated; or update, if the if row not restricted, the query plan received for the execution of the query plan updated.

In this disclosure, a federated system **1300** to provide a unified access control for the data stored in federated databases is disclosed. The federated system **1300** comprises at least one query parser **1308**, at least one query planner **1310**, at least one central access controller **1312**, at least one physical query generator **1314**, and at least one executor **1316**.

The query parser **1308** is configured to receive at least a federated query; parse the federated query received to fetch at least a table associated information from the federated query, the table associated information comprises at least a table and associated column name; and validate the table associated information fetched against at least a federated metadata pre-stored to identify at least one table in at least one database.

The query planner **1310** is configured to generate at least a query plan based on the table associated information and utilizing the table identified.

The central access controller **1312** is configured to verify the query plan generated for table associated information against at least a user rights pre-stored in at least at least one central authorization metadata table, the table and the associated column name is verified; update, if the user rights pre-stored allow access to the table associated information identified, the query plan generated.

The physical query generator **1314** is configured to convert the query plan updated to at least a physical query for execution by the database.

The executor **1316** is configured to execute the physical query to return at least a result for the federated query received.

In one implementation, the federated system **1300** may further comprises a processor **1302** coupled to a memory **1306**

In this disclosure, a device **1400**, in a federated system, to provide a unified access control for the data stored in federated databases is disclosed. The device comprises a processor **1402**, coupled to a memory **1406**, for executing a plurality of modules present in the memory **1406**, the processor **1402** on execution of the modules, configured to carry out the system and method implementation set out by the independent claims.

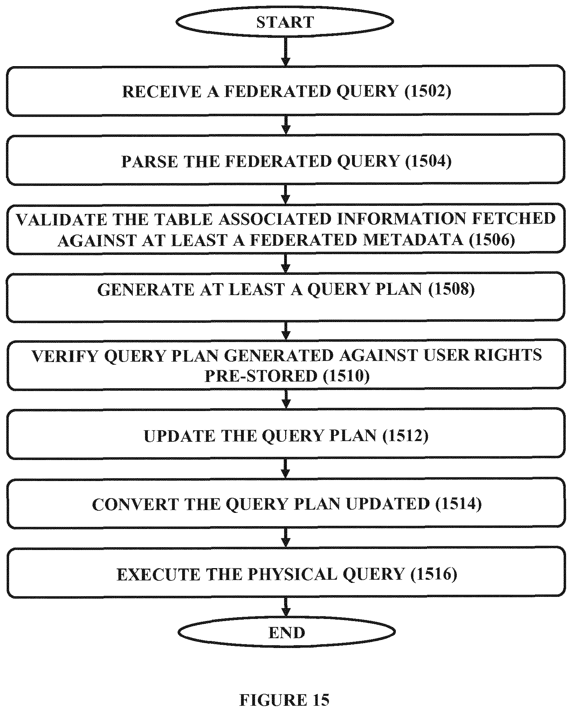

Referring now to figure **15**, a method, for providing unified access control for the data stored federated databases, by a federated system is illustrated, in accordance with an implementation of the present subject matter. The method may be described in the general context of computer executable instructions. Generally, computer executable instructions can include routines, programs, objects, components, data structures, procedures, modules, functions, etc., that perform particular functions or implement particular abstract data types. The method may also be practiced in a distributed computing environment where functions are performed by remote processing devices that are linked through a communications network. In a distributed computing environment, computer executable instructions may be located in both local and remote computer storage media, including memory storage devices.

The order in which the method is described is not intended to be construed as a limitation, and any number of the described method blocks can be combined in any order to implement the method or alternate methods. Additionally, individual blocks may be deleted from the method without departing from the protection scope of the subject matter described herein. Furthermore, the method can be implemented in any suitable hardware, software, firmware, or combination thereof. However, for ease of explanation, in the implementations described below, the method may be considered to be implemented in the above described federated system **1300** and/or the device **1400.**

In one implementation, a method for providing unified access control for the data stored federated databases is disclosed.

At step **1502**, at least a federated query is received.

At step **1504**, the federated query received is parsed to fetch at least table associated information from the federated query. The table associated information comprises at least a table and associated column name.

At step **1506**, the table associated information fetched is validated against at least a federated metadata to identify at least one table in at least one database.

At step **1508**, at least a query plan is generated based on the table associated information and utilizing the table identified. The query plan is generated based on at least table associated information fetched from at least a federated query received. The query plan may include at least a table associated information to be accessed based on the federated query received, the table associated information preferably include: at least a column to be selected, or at least a filter to be applied on at least one row, or at least one operation like sorting, grouping or join or any combination thereof based on the table associated information received.

In one implementation, the query plan is a grant query plan associated with a grant command, or a normal query plan associated with a traditional command, or any combination thereof. If the query plan is a grant query plan, the central access controller is further configured to: update the central authorization metadata in accordance with at least information associated with the grant query plan received. The access to the table, and/or the column, and/or the row is validated using at least a federated access checker in the federated query.

If the query plan is normal query plan, the method further comprises: validate, using at least a validator selected from a federated table validator, or a column validator or a row validator or any combination thereof, the access to the table, and/or the column, and/or the row in the federated query using at least a federated access checker.

At step **1510**, the query plan generated is verified for table associated information against at least a user rights pre-stored in at least at least one central authorization metadata table. The table and the associated column name are verified. The user rights may be stored in the central authorization metadata holding information associated with the access to the table associated information against at least a user accessing the database. The central authorization metadata table may store at least a table level control or a column level control, or a row level control, or a record level control, or any combination thereof, associated with the table residing in the database. The user right may be at least one access right selected from a group of rights comprising: read or write or alter or any combination thereof. The central authorization metadata table may be logically associated with at least one federated metadata in the database.

At step **1512**, if the user rights pre-stored allow access to the table associated information identified, the query plan generated is updated. In on implementation, while updating the query plan, the method may: remove at least a restricted column from the query plan generated; and/or add at least a filter to exclude at least a restricted row from the query plan generated; and/or fail the federated query received if the query includes at least a restricted table.

At step **1514**, the query plan updated is converted to at least a physical query for execution by the database.

At step **1516**, the physical query is executed to return at least a result for the federated query received.

In one implementation, a method, for providing unified access control for the data stored federated databases, by a federated system is disclosed. The method comprises:
- receiving at least a query plan generated;
- verifying the query plan generated against at least a user rights pre-stored in at least one central authorization metadata table, a table and an associated column name from the query plan is verified;
- updating, if the user rights pre-stored allow access to the query plan verified, the query plan generated;
- converting the query plan updated to at least a physical query for execution by at least one database; and
- executing the physical query to return at least a result for the federated query received.

In one implementation, the query plan is generated based on at least table associated information fetched from at least a federated query received.

In one implementation not claimed in the present application, a method for data loading is disclosed. The method comprises:
- executing, by at least one first node, at least a query received;
- analyzing, by the first node, by utilizing the query received, the data to be loaded and at least an availability of at least one resource in a database server or a database cluster;
- distributing, by the first node, the data across at least one second node, the second node receives an instruction to participate in a data loading operation from the first node;
- generating, by the second node, on receipt of the data from the first node, at least a data page and/or at least a data segment, the data page and/or the data segment comprise at least a meta-data and/or at least a data file; and
- distributing, by the second node, based at least on an ownership, the data page and/or the data segment generated, to at least one third node for storage.

Apart from what is disclosed above, the present disclosure has some addition advantages as provided below by:
- providing a central mechanism for configuring the access control (fine grained - Table, column, row) to various underlying databases in a federated system;
- providing access control for federated queries where in different users can have different access rights to the federated tables;
- providing security and access control in big data at a higher layer by applying restrictions/filters in the query itself;
- providing a uniform access control mechanism even though the different underlying systems support different levels of access control;
- providing common access control for databases which do not have built-in access control mechanism such as in Big Data - Hbase, Parquet files etc.
- providing unified access control when mixing big data with traditional data sources.

A person skilled in the art may understand that any known or new algorithms by be used for the implementation of the present disclosure. However, it is to be noted that, the present disclosure provides a method to be used during back up operation to achieve the above mentioned benefits and technical advancement irrespective of using any known or new algorithms.

A person of ordinary skill in the art may be aware that in combination with the examples described in the implementations disclosed in this specification, units and algorithm steps may be implemented by electronic hardware, or a combination of computer software and electronic hardware. Whether the functions are performed by hardware or software depends on the particular applications and design constraint conditions of the technical solution. A person skilled in the art may use different methods to implement the described functions for each particular application, but it should not be considered that the implementation goes beyond the scope of the present disclosure.

It may be clearly understood by a person skilled in the art that for the purpose of convenient and brief description, for a detailed working process of the foregoing system, apparatus, and unit, reference may be made to a corresponding process in the foregoing method implementations, and details are not described herein again.

In the several implementations provided in the present application, it should be understood that the disclosed system, apparatus, and method may be implemented in other manners. For example, the described apparatus implementation is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

When the functions are implemented in a form of a software functional unit and sold or used as an independent product, the functions may be stored in a computer-readable storage medium. Based on such an understanding, the technical solutions of the present disclosure essentially, or the part contributing to the prior art, or a part of the technical solutions may be implemented in a form of a software product. The computer software product is stored in a storage medium, and includes several instructions for instructing a computer device (which may be a personal computer, a server, or a network device) to perform all or a part of the steps of the methods described in the implementation of the present disclosure. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Although implementations for systems, methods, and devices for unified access control on federated databases have been described in language specific to structural features and/or methods, it is to be understood that the appended claims are not necessarily limited to the specific features or methods described. Rather, the specific features and methods are disclosed as examples of implementations of the systems, methods, and devices for unified access control on federated databases.

The scope of protection shall be defined by the appended claims.

## Claims

1. An access control system for providing a unified access control for data stored in federated databases, the access control system comprising a central access controller configured to:
receive a federated query from a user;
parse the federated query received to fetch table-associated information from the federated query, the table associated information comprising one or more tables and associated column names;
generate a query plan, based on the table associated information fetched from the received federated query;
verify the generated query plan by using a user right pre-stored in a central authorization metadata table and the one or more tables and associated column names;
and, based on the verification,
fail the federated query if, according to the user right, any of the one or more tables are restricted to the user, otherwise,
fail the query if, according to the user right, at least one of the columns of the query plan is restricted, otherwise,
update the generated query plan, wherein the update comprises:
for each column name associated with the one or more tables in the query plan:
if the column name is an asterisk, replace the asterisk with all column names for columns of the associated table not restricted according to the user right; and
after all columns in the query plan have been checked and the query did not fail: if, according to the user right, there are any restricted rows associated with the one or more tables in the query plan, add a filter to exclude the restricted rows from the generated query plan.

2. The access control system as claimed in claim 1, wherein the central access controller is further configured to store the user right in the central authorization metadata table, wherein the central authorization metadata table holds information associated with an access to the table associated information against the user accessing the database, wherein the table associated information is received in the federated query and comprises one or more of: a column to be selected, at least a filter to be applied on at least one row, or at least one operation, wherein the at least one operation is at least one of sorting, grouping or join or any combination thereof.

3. The access control system as claimed in claim 1, wherein the central authorization metadata table stores at least one of a table level control, a column level control, a row level control, or a record level control, associated with at least a table residing in the database.

4. The access control system as claimed in claim 1, wherein the central access controller is further configured to logically associate the central authorization metadata table with federated metadata in the database.

5. An access control method performed by an access control system for providing a unified access control for data stored in federated databases, the access control method comprising:
receiving (1502) a federated query from a user;
parsing (1504) the federated query received to fetch table-associated information from the federated query, the table associated information comprising one or more tables and associated column names;
generating (1508) a query plan, based on the table associated information fetched from the received federated query;
verifying (1510) the generated query plan by using a user right pre-stored in a central authorization metadata table and the one or more tables and associated column names;
and, based on the verification,
failing the federated query if, according to the user right, any of the one or more tables are restricted to the user, otherwise,
failing the query if, according to the user right, at least one of the columns of the query plan is restricted, otherwise,
updating (1512) the generated query plan, wherein the updating comprises:
for each column name associated with the one or more tables in the query plan:
if the column name is an asterisk, replacing the asterisk with all column names for columns of the associated table not restricted according to the user right; and
after all columns in the query plan have been checked and the query did not fail: if, according to the user right, there are any restricted rows associated with the one or more tables in the query plan, adding a filter to exclude the restricted rows from the generated query plan.

6. The method as claimed in claim 5, further comprising storing the user right in the central authorization metadata table, wherein the central authorization metadata table holds information associated with an access to the table associated information against the user accessing the database, wherein the table associated information is received in the federated query and comprises one or more of: a column to be selected, at least a filter to be applied on at least one row or at least one operation, wherein the at least one operation is at least one of sorting, grouping or join or any combination thereof.

7. The method as claimed in claim 5, wherein the central authorization metadata table stores at least one of a table level control, a column level control, a row level control, or a record level control, associated with at least a table residing in the database.

8. The method as claimed in claim 5, further comprising logically associating the central authorization metadata table with federated metadata in the database.

9. A non-transitory computer-readable medium for storing computer instructions, that, when executed by one or more processors, cause the one or more processors to perform the method according to any one of claims 5 to 8.

## Patentansprüche

1. Zugriffssteuerungssystem zum Bereitstellen einer einheitlichen Zugriffssteuerung für Daten, die in Verbunddatenbanken gespeichert sind, wobei das Zugriffssteuerungssystem eine zentrale Zugriffssteuerung umfasst, die für Folgendes konfiguriert ist:
Empfangen einer Verbundabfrage von einem Benutzer;
Parsen der empfangenen Verbundabfrage, um tabellenzugeordnete Informationen von der Verbundabfrage abzurufen, wobei die tabellenzugeordneten Informationen eine oder mehrere Tabellen und zugeordnete Spaltennamen umfassen;
Erzeugen eines Abfrageplans basierend auf den tabellenzugeordneten Informationen, die von der empfangenen Verbundabfrage abgerufen wurden;
Verifizieren des erzeugten Abfrageplans durch Verwenden eines Benutzerrechts, das in einer zentralen Autorisierungsmetadatentabelle vorgespeichert ist, und der einen oder der mehreren Tabellen und zugeordneten Spaltennamen;
und basierend auf der Verifizierung,
Nichtbestehen der Verbundabfrage, falls, gemäß dem Benutzerrecht, beliebige der einen oder der mehreren Tabellen auf den Benutzer beschränkt sind, andernfalls
Nichtbestehen der Abfrage, falls, gemäß dem Benutzerrecht, wenigstens eine der Spalten des Abfrageplans beschränkt ist, andernfalls
Aktualisieren des erzeugten Abfrageplans, wobei die Aktualisierung Folgendes umfasst:
für jeden Spaltennamen, der der einen oder den mehreren Tabellen in dem Abfrageplan zugeordnet ist:
falls der Spaltenname ein Stern ist, Ersetzen des Sterns durch alle Spaltennamen für Spalten der zugeordneten Tabelle, die gemäß dem Benutzerrecht nicht beschränkt ist; und
nachdem alle Spalten in dem Abfrageplan überprüft wurden und die Abfrage bestanden ist: falls, gemäß dem Benutzerrecht, beliebige beschränkte Zeilen vorhanden sind, die der einen oder den mehreren Tabellen in dem Abfrageplan zugeordnet sind, hinzufügen eines Filters, um die beschränkten Zeilen aus dem erzeugten Abfrageplan auszuschließen.

2. Zugriffssteuerungssystem nach Anspruch 1, wobei die zentrale Zugriffssteuerung ferner konfiguriert ist, um das Benutzerrecht in der zentralen Autorisierungsmetadatentabelle zu speichern, wobei die zentrale Autorisierungsmetadatentabelle Informationen enthält, die einem Zugriff auf die tabellenzugeordneten Informationen gegenüber dem Benutzer zugeordnet sind, der auf die Datenbank zugreift, wobei die tabellenzugeordneten Informationen in der Verbundabfrage empfangen werden und Folgendes umfassen: eine Spalte, die ausgewählt werden soll, wenigstens einen Filter, der auf wenigstens eine Zeile angewendet werden soll, und/oder wenigstens eine Operation, wobei die wenigstens eine Operation ein Sortieren, ein Gruppieren oder ein Verknüpfen und/oder eine beliebige Kombination davon ist.

3. Zugriffssteuerungssystem nach Anspruch 1, wobei die zentrale Autorisierungsmetadatentabelle eine Steuerung auf Tabellenebene, eine Steuerung auf Spaltenebene, eine Steuerung auf Zeilenebene und/oder eine Steuerung auf Datensatzebene speichert, die wenigstens einer Tabelle zugeordnet ist, die sich in der Datenbank befindet.

4. Zugriffssteuerungssystem nach Anspruch 1, wobei die zentrale Zugriffssteuerung ferner konfiguriert ist, um die zentrale Autorisierungsmetadatentabelle Verbundmetadaten in der Datenbank logisch zuzuordnen.

5. Zugriffssteuerungsverfahren, das durch ein Zugriffssteuerungssystem zum Bereitstellen einer einheitlichen Zugriffssteuerung für Daten, die in Verbunddatenbanken gespeichert sind, durchgeführt wird, wobei das Zugriffssteuerungsverfahren Folgendes umfasst:
Empfangen (1502) einer Verbundabfrage von einem Benutzer;
Parsen (1504) der empfangenen Verbundabfrage, um tabellenzugeordnete Informationen von der Verbundabfrage abzurufen, wobei die tabellenzugeordneten Informationen eine oder mehrere Tabellen und zugeordnete Spaltennamen umfassen;
Erzeugen (1508) eines Abfrageplans basierend auf den tabellenzugeordneten Informationen, die von der empfangenen Verbundabfrage abgerufen wurden;
Verifizieren (1510) des erzeugten Abfrageplans durch Verwenden eines Benutzerrechts, das in einer zentralen Autorisierungsmetadatentabelle vorgespeichert ist, und der einen oder der mehreren Tabellen und zugeordneten Spaltennamen;
und basierend auf der Verifizierung,
Nichtbestehen der Verbundabfrage, falls, gemäß dem Benutzerrecht, beliebige der einen oder der mehreren Tabellen auf den Benutzer beschränkt sind, andernfalls
Nichtbestehen der Abfrage, falls, gemäß dem Benutzerrecht, wenigstens eine der Spalten des Abfrageplans beschränkt ist, andernfalls
Aktualisieren (1512) des erzeugten Abfrageplans, wobei das Aktualisieren Folgendes umfasst:
für jeden Spaltennamen, der der einen oder den mehreren Tabellen in dem Abfrageplan zugeordnet ist:
wenn der Spaltenname ein Stern ist, Ersetzen des Sterns durch alle Spaltennamen für Spalten der zugeordneten Tabelle, die nicht gemäß dem Benutzerrecht beschränkt ist; und
nachdem alle Spalten in dem Abfrageplan überprüft wurden und die Abfrage bestanden ist: falls, gemäß dem Benutzerrecht, beliebige beschränkte Zeilen vorhanden sind, die der einen oder den mehreren Tabellen in dem Abfrageplan zugeordnet sind, hinzufügen eines Filters, um die beschränkten Zeilen aus dem erzeugten Abfrageplan auszuschließen.

6. Verfahren nach Anspruch 5, das ferner das Speichern des Benutzerrechts in der zentralen Autorisierungsmetadatentabelle umfasst, wobei die zentrale Autorisierungsmetadatentabelle Informationen enthält, die einem Zugriff auf die tabellenzugeordneten Informationen gegenüber dem Benutzer zugeordnet sind, der auf die Datenbank zugreift, wobei die tabellenzugeordneten Informationen in der Verbundabfrage empfangen werden und eine Spalte, die ausgewählt werden soll, wenigstens einen Filter, der auf wenigstens eine Zeile angewendet werden soll, und/oder wenigstens eine Operation umfassen, wobei die wenigstens eine Operation ein Sortieren, ein Gruppieren oder ein Verknüpfen und/oder eine beliebige Kombination davon ist.

7. Verfahren nach Anspruch 5, wobei die zentrale Autorisierungsmetadatentabelle eine Steuerung auf Tabellenebene, eine Steuerung auf Spaltenebene, eine Steuerung auf Zeilenebene und/oder eine Steuerung auf Datensatzebene speichert, die wenigstens einer Tabelle zugeordnet ist, die sich in der Datenbank befindet.

8. Verfahren nach Anspruch 5, das ferner das logische Zuordnen der zentralen Autorisierungsmetadatentabelle zu Verbundmetadaten in der Datenbank umfasst.

9. Nicht flüchtiges computerlesbares Medium zum Speichern von Computeranweisungen, die, wenn sie durch einen oder mehrere Prozessoren ausgeführt werden, den einen oder die mehreren Prozessoren veranlassen, das Verfahren nach einem der Ansprüche 5 bis 8 durchzuführen.

## Revendications

1. Système de contrôle d'accès destiné à fournir un contrôle d'accès unifié pour des données stockées dans des bases de données fédérées, le système de contrôle d'accès comprenant un contrôleur d'accès central configuré pour :
recevoir une requête fédérée d'un utilisateur ;
analyser la requête fédérée reçue pour extraire les informations associées à la table à partir de la requête fédérée, les informations associées à la table comprenant une ou plusieurs tables et des noms de colonnes associés ;
générer un plan de requête, en fonction des informations associées à la table extraites de la requête fédérée reçue ;
vérifier le plan de requête généré en utilisant un droit d'utilisateur préenregistré dans une table de métadonnées d'autorisation centrale et la ou les tables et noms de colonnes associés ;
et, en fonction de la vérification,
faire échouer la requête fédérée si, selon le droit de l'utilisateur, l'une quelconque de la ou des tables est restreinte à l'utilisateur, sinon,
faire échouer la requête si, selon le droit de l'utilisateur, au moins une des colonnes du plan de requête est restreinte, sinon,
mettre à jour le plan de requête généré, la mise à jour comprenant :
pour chaque nom de colonne associé à la ou aux tables dans le plan de requête :
si le nom de colonne est un astérisque, remplacer l'astérisque par tous les noms de colonnes pour les colonnes de la table associée non restreintes selon le droit de l'utilisateur ; et
une fois que toutes les colonnes du plan de requête ont été vérifiées et que la requête n'a pas échoué : si, selon le droit de l'utilisateur, des lignes restreintes sont associées à la ou aux tables dans le plan de requête, ajouter un filtre pour exclure les lignes restreintes à partir du plan de requête généré.

2. Système de contrôle d'accès selon la revendication 1, dans lequel le contrôleur d'accès central est en outre configuré pour stocker le droit d'utilisateur dans la table de métadonnées d'autorisation centrale, la table de métadonnées d'autorisation centrale contenant des informations associées à un accès à la table des informations associées contre l'utilisateur accédant à la base de données, les informations associées à la table étant reçues dans la requête fédérée et comprenant : une colonne à sélectionner et/ou au moins un filtre à appliquer sur au moins une ligne et/ou au moins une opération, l'au moins une opération étant le tri et/ou le regroupement et/ou la jointure et/ou toute combinaison de ceux-ci.

3. Système de contrôle d'accès selon la revendication 1, dans lequel la table de métadonnées d'autorisation centrale stocke une commande de niveau de table et/ou une commande de niveau de colonne et/ou une commande de niveau de ligne et/ou une commande de niveau d'enregistrement, associée à au moins une table résidant dans la base de données.

4. Système de contrôle d'accès selon la revendication 1, dans lequel le contrôleur d'accès central est en outre configuré pour associer logiquement la table de métadonnées d'autorisation centrale aux métadonnées fédérées dans la base de données.

5. Procédé de contrôle d'accès exécuté par un système de contrôle d'accès pour fournir un contrôle d'accès unifié pour des données stockées dans des bases de données fédérées, le procédé de contrôle d'accès comprenant :
la réception (1502) d'une requête fédérée provenant d'un utilisateur ;
l'analyse (1504) de la requête fédérée reçue pour extraire les informations associées à une table à partir de la requête fédérée, les informations associées à la table comprenant une ou plusieurs tables et des noms de colonnes associés ;
la génération (1508) d'un plan de requête, en fonction des informations associées à la table extraites de la requête fédérée reçue ;
la vérification (1510) du plan de requête généré en utilisant un droit d'utilisateur préenregistré dans une table de métadonnées d'autorisation centrale et la ou les tables et noms de colonnes associés ;
et, en fonction de la vérification,
l'échec de la requête fédérée si, selon le droit de l'utilisateur, l'une quelconque de la ou des tables est restreinte à l'utilisateur, sinon,
l'échec de la requête si, selon le droit de l'utilisateur, au moins une des colonnes du plan de requête est restreinte, sinon,
la mise à jour (1512) du plan de requête généré, la mise à jour comprenant :
pour chaque nom de colonne associé à la ou aux tables dans le plan de requête :
si le nom de colonne est un astérisque, remplacer l'astérisque par tous les noms de colonnes pour les colonnes de la table associée non restreintes selon le droit de l'utilisateur ; et
après que toutes les colonnes du plan de requête ont été vérifiées et que la requête n'a pas échoué : si, selon le droit de l'utilisateur, des lignes restreintes sont associées à une ou plusieurs tables dans le plan de requête, ajouter un filtre pour exclure les lignes restreintes à partir du plan de requête généré.

6. Procédé selon la revendication 5, comprenant en outre le stockage du droit d'utilisateur dans la table de métadonnées d'autorisation centrale, la table de métadonnées d'autorisation centrale contenant des informations associées à un accès à la table des informations associées contre l'utilisateur accédant à la base de données, la table étant associée aux informations étant reçue dans la requête fédérée et comprenant une colonne à sélectionner et/ou au moins un filtre à appliquer sur au moins une ligne et/ou au moins une opération, l'au moins une opération étant le tri, le regroupement ou rejoindre ou toute combinaison de ceux-ci.

7. Procédé selon la revendication 5, dans lequel la table de métadonnées d'autorisation centrale stocke une commande de niveau de table et /ou une commande de niveau de colonne et/ou une commande de niveau de ligne et/ou une commande de niveau d'enregistrement, associée à au moins une table résidant dans la base de données.

8. Procédé selon la revendication 5, comprenant en outre l'association logique de la table de métadonnées d'autorisation centrale avec des métadonnées fédérées dans la base de données.

9. Support non transitoire lisible par ordinateur stockant des instructions informatiques qui, lorsqu'elles sont exécutées par un ou plusieurs processeurs, amènent le ou les processeurs à réaliser le procédé des revendications 5 à 8.
